(19) **Europäisches Patentamt / European Patent Office / Office européen des brevets**

(11) **EP 3 170 752 B1**

(12) **FASCICULE DE BREVET EUROPEEN**

(45) Date de publication et mention
de la délivrance du brevet:
**13.06.2018 Bulletin 2018/24**

(51) Int Cl.:
***B64G 1/00*** *(2006.01)*     ***B64G 1/36*** *(2006.01)*
***B64G 1/26*** *(2006.01)*     ***G05D 1/08*** *(2006.01)*
***G05D 1/04*** *(2006.01)*     *B64G 1/40* *(2006.01)*
*G01S 19/13* *(2010.01)*

(21) Numéro de dépôt: **16197977.8**

(22) Date de dépôt: **09.11.2016**

(54) **PROCEDE DE TRANSFERT ORBITAL D'UN VAISSEAU SPATIAL UTILISANT UNE POUSSEE CONTINUE OU QUASI-CONTINUE ET SYSTEME EMBARQUE DE PILOTAGE POUR LA MISE EN UVRE D'UN TEL PROCEDE**

ORBITTRANSFER-VERFAHREN EINES RAUMFAHRZEUGES, DAS EINEN KONTINUIERLICHEN ODER QUASIKONTINUIERLICHEN SCHUB NUTZT, UND ON-BOARD-STEUERSYSTEM ZUR UMSETZUNG DIESES VERFAHRENS

ORBITAL TRANSFER METHOD OF A SPACECRAFT USING A CONTINUOUS OR QUASI-CONTINUOUS THRUST AND ON-BOARD PILOTING SYSTEM FOR IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.11.2015 FR 1502429**

(43) Date de publication de la demande:
**24.05.2017 Bulletin 2017/21**

(73) Titulaire: **Thales**
**92400 Courbevoie (FR)**

(72) Inventeur: **AMALRIC, Joël**
**06156 Cannes-La-Bocca (FR)**

(74) Mandataire: **Priori, Enrico et al**
**Marks & Clerk France**
**Conseils en Propriété Industrielle**
**Immeuble «Visium»**
**22, avenue Aristide Briand**
**94117 Arcueil Cedex (FR)**

(56) Documents cités:
**EP-A1- 2 738 103**     **EP-A1- 2 921 923**

• SEUNGWON LEE ET AL: "Design and optimization of low-thrust orbit transfers", AEROSPACE CONFERENCE, 2005 IEEE, IEEE, PISCATAWAY, NJ, USA, 5 mars 2005 (2005-03-05), pages 855-869, XP031330382, DOI: 10.1109/AERO.2005.1559377 ISBN: 978-0-7803-8870-3
• Eui Dong ET AL: "DISCRETE AND CONTINUOUS LYAPUNOV-BASED TRANSFER BETWEEN ELLIPTIC KEPLERIAN ORBITS", Discrete and Continuous Dynamical Systems - Series B, Volume 2, Number 1, February 2002, 1 février 2002 (2002-02-01), pages 57-67, XP055293711, Extrait de l'Internet: URL:http://citeseerx.ist.psu.edu/viewdoc/download?doi=10.1.1.112.6524&rep=rep1&type=pdf [extrait le 2016-08-04]

**Description**

L'invention se rapporte au domaine du vol spatial. Elle porte sur un procédé pour réaliser le transfert orbital d'un vaisseau spatial utilisant une poussée continue ou quasi-continue, sur un système embarqué de pilotage d'un vaisseau spatial pour la mise en oeuvre d'un tel procédé et sur un vaisseau spatial équipé d'un tel système.

Les vaisseaux spatiaux - satellites artificiels ou sondes - sont généralement injectés par un lanceur dans une orbite terrestre dite d'injection, qui ne correspond pas à l'orbite, non nécessairement terrestre, qu'il doit atteindre pour accomplir sa mission (« mise à poste »), par exemple une orbite géostationnaire pour un satellite de télécommunications. Par ailleurs, les missions des sondes d'exploration spatiale comportent généralement plusieurs phases, caractérisées par des orbites différentes. Il est donc indispensable de pouvoir effectuer, de manière précise, des manoeuvres de transfert orbital.

Dans le cas des vaisseaux spatiaux « conventionnels », à propulsion chimique, le transfert orbital est effectué à l'aide de poussées très intenses et très brèves par rapport à une période orbitale. Typiquement, une première poussée éjecte le vaisseau spatial de son orbite initiale (par exemple, d'injection) et le positionne sur une orbite dite de transfert, qui est choisie de manière à croiser l'orbite cible, ou de destination. Lorsque le vaisseau spatial est parvenu près du point de croisement, une deuxième poussée le met sur ladite orbite cible.

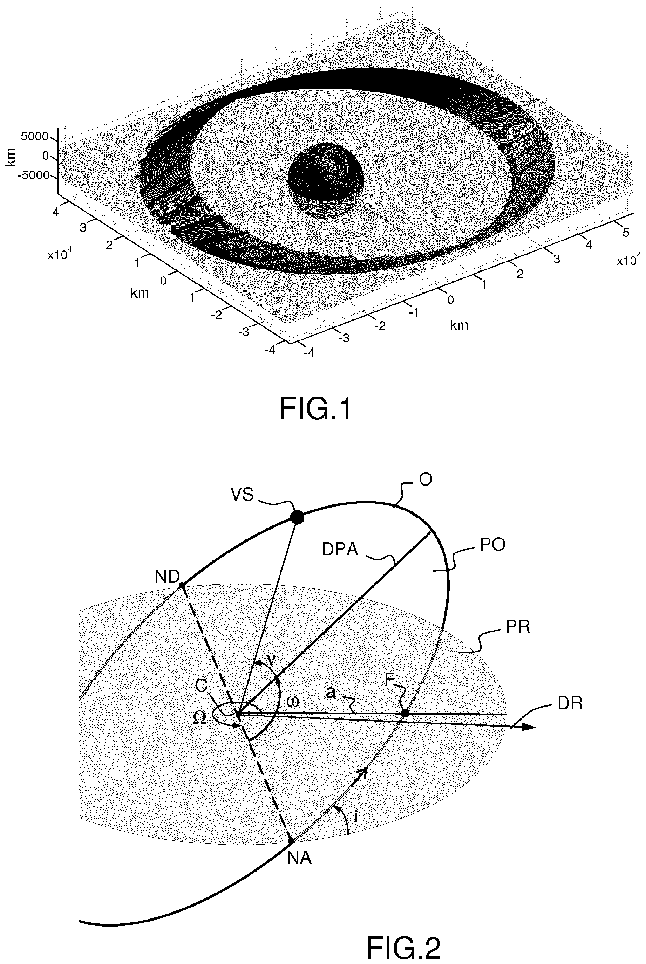

Les systèmes de propulsion électrique connaissent un développement important car ils permettent de limiter très fortement la masse de propulsant nécessaire à impartir au vaisseau spatial une impulsion donnée. Cela permet de réduire la masse du vaisseau au lancement et/ou de prolonger sa durée de vie. La propulsion électrique fournit une poussée plus faible de plusieurs ordres de grandeur par rapport à la poussée chimique, mais qui peut être maintenue, sans interruption ou de manière intermittente, sur des durées comparables (par exemple, non inférieures à un dixième) à la durée du transfert orbital ; on parle dans ce cas de poussée continue ou « quasi-continue ». Le transfert orbital s'effectue donc de manière tout à fait différente que dans le cas de la propulsion chimique - par une déformation progressive de l'orbite de départ. A titre d'exemple, la figure 1 illustre le transfert progressif d'une orbite initiale OI elliptique en une orbite cible OC circulaire.

Se pose donc le problème de contrôler l'intensité et l'orientation de la poussée tout au long de la phase de transfert.

Classiquement, le contrôle s'effectue en boucle ouverte : une loi de commande optimale est calculée au sol et transmise à l'ordinateur de bord qui pilote le système de propulsion. A des intervalles réguliers, par exemple une fois par semaine, une nouvelle loi de commande est recalculée en tenant compte de la position et de la vitesse réelles du vaisseau spatial, qui en général ne correspondront pas exactement à celles attendues. Une telle approche est lourde à mettre en oeuvre, car les calculs d'optimisation de trajectoire sont très complexes (il s'agit de résoudre un problème d'optimisation non-linéaire sous contraintes elles aussi non-linéaires). Par ailleurs, entre deux mises à jour successives de la loi de commande, le vaisseau spatial peut s'écarter significativement de sa trajectoire idéale, ce qui augmente la durée de la phase de transfert et la consommation de propulsant.

L'article de Thierry Dargent « Averaging technique in T-3D : an integrated tool for continuous thrust optimal control in orbit transfers », AAS 14-312 (2014) décrit une technique de calcul d'une loi de commande optimale de la poussée continue ou quasi-continue pouvant être utilisée dans une approche à boucle ouverte.

Le document EP 2 738 103 divulgue un procédé de transfert orbital d'un vaisseau spatial utilisant une propulsion à poussée continue ou quasi-continue utilisant une loi de commande visant à maximiser un hamiltonien (commande optimale).

Il est également connu d'utiliser des techniques de type heuristiques, dites par stabilisation, qui se basent - implicitement - sur la minimisation d'une fonction de contrôle de Lyapunov. Une technique de ce type, dite « Q-Law », utilisée principalement comme méthode de pré-dimensionnement, est décrite dans les articles suivants :

- A.E. Petropoulos, S. Lee « Optimisation of low-thrust orbit transfers using the Q-Law for the initial guess », AAS/AIAA Astrodynamics Specialists Conference, 2005;
- S. Lee et al. « Design and Optimization of Low-thrust Orbit Transfert » in: Aerospace Conference, 2005 IEEE. IEEE, 2005. p. 855-869;
- A.E. Petropoulos et al. « Techniques for designing many-revolution, electric-propulsion trajectories », AAS 14-373, 2014.

Cette technique ne donne pas pleinement satisfaction. D'une part, elle présente des problèmes d'instabilité, notamment dans le cas d'orbites à faible excentricité et faible inclinaison, qui présentent un intérêt pratique très significatif (il suffit de penser aux orbites géostationnaires, qui ont une excentricité et une inclinaison nulle), d'autre part elle conduit à des résultats assez éloignés d'une loi de commande optimale, à moins d'avoir recours à des techniques sophistiquées (optimisation de coefficients de pondération à l'aide d'algorithmes génétiques). Par ailleurs, elle ne permet pas de gérer les contraintes de rendez-vous en longitude, qui sont très importantes dans le cas de la mise à poste des satellites géostationnaires.

Pour remédier aux inconvénients de la commande en boucle ouverte, il serait souhaitable d'adopter une approche en boucle fermée (boucle de rétroaction), dans laquelle un processeur embarqué calcule en temps réel la commande à appliquer au système de propulsion en tenant compte de la position et de la vitesse du vaisseau spatial, déterminées par exemple grâce à un système de navigation satellitaire (GNSS, de l'anglais « Global Navigation Satellite System »). La puissance de calcul des processeurs embarqués étant limitée, il parait cependant difficile de mettre en oeuvre une loi de commande optimale en boucle fermée.

L'invention vise à surmonter les inconvénients précités de l'art antérieur, et plus particulièrement à procurer une technique de commande en boucle fermée de la poussée continue ou quasi-continue pour réaliser un transfert orbital qui soit à la fois stable, simple à mettre en oeuvre et proche de l'optimalité. Avantageusement, une telle technique peut permettre de gérer les contraintes de rendez-vous en longitude.

Conformément à l'invention, ce but est atteint grâce à l'utilisation d'une loi de commande heuristique qui, comme dans le cas de la Q-Law, est obtenue à partir d'une fonction de contrôle de Lyapunov mais qui :

- exprime cette fonction au moyen de paramètres orbitaux équinoxiaux, au lieu des paramètres orbitaux « classiques » utilisés dans l'art antérieur ; et
- utilise des paramètres orbitaux (équinoxiaux) moyennés sur au moins une demi-période de révolution.

Ainsi, un objet de l'invention est un procédé de transfert orbital d'un vaisseau spatial utilisant une propulsion à poussée continue ou quasi-continue, le procédé comprenant :

- l'acquisition, au moins une fois dans chaque révolution du vaisseau spatial, de mesures de sa position et de sa vitesse ;
- le calcul d'une fonction de commande de la poussée en fonction desdites mesures ; et
- le pilotage de ladite poussée conformément à ladite loi de commande ;

caractérisé en ce que ladite loi de commande est obtenue à partir d'une fonction de contrôle de Lyapunov proportionnelle à une somme pondérée de termes, chaque terme étant représentatif d'une erreur quadratique entre un paramètre orbital mesuré d'une orbite du vaisseau spatial moyenné sur au moins une demi-révolution et le paramètre orbital correspondant d'une orbite cible d'arrivée, normalisée par rapport à la valeur maximale de la dérive, moyennée sur au moins une demi-révolution, dudit paramètre orbital dudit vaisseau spatial.

Selon des modes de réalisation particuliers d'un tel procédé :

- Ledit ou chaque dit paramètre orbital peut être un paramètre orbital équinoxial.
- L'acquisition desdites mesures de position et de vitesse peut être effectuée à bord dudit vaisseau spatial au moyen d'un récepteur GNSS.
- Ledit calcul d'une fonction de commande peut être effectué par un processeur embarqué à bord dudit vaisseau spatial.
- Ladite fonction de contrôle de Lyapunov peut comprendre au moins un terme multiplicatif constitué par une fonction barrière imposant une contrainte de d'altitude maximale ou minimale dudit vaisseau spatial.
- Les poids de ladite somme pondérée peuvent être constants et non-négatifs. Plus particulièrement, ils peuvent être tous égaux.
- En variante, le procédé peut comporter une étape d'optimisation numérique des poids de ladite somme pondérée, cette étape étant effectuée par un ordinateur au sol avant le début du transfert et au moins une fois au cours du transfert.
- Le procédé peut également comporter, après une phase initiale du transfert :

  - le calcul d'une estimation d'une erreur de rendez-vous en longitude sur l'orbite cible d'arrivée ;
  - la modification, dans ladite fonction de contrôle de Lyapunov, d'un paramètre orbital de ladite orbite cible d'arrivée représentant son demi-grand axe ou d'un coefficient de pondération de ce paramètre ; et
  - au cours d'une phase terminale du transfert, le maintien d'une valeur constante dudit paramètre orbital et de son coefficient de pondération.

- Ladite propulsion peut être de type électrique.
- Le pilotage de ladite poussée peut comporter la détermination d'au moins son orientation.

Un autre objet de l'invention est un système embarqué de pilotage d'un vaisseau spatial comprenant :

- un système de propulsion à poussée continue ou quasi-continue ;
- un récepteur GNSS configuré pour acquérir, au moins une fois dans chaque révolution du vaisseau spatial, des mesures de sa position et de sa vitesse ;
- un processeur programmé pour calculer une fonction de commande de la poussée en fonction desdites mesures et pour piloter ledit système de propulsion à poussée continue ou quasi-continue conformément à ladite loi de commande ;

caractérisé en ce que ledit processeur est programmé pour calculer ladite loi de commande à partir d'une fonction de contrôle de Lyapunov proportionnelle à une somme pondérée de termes, chaque terme étant représentatif d'une erreur quadratique entre un paramètre orbital mesuré d'une orbite du vaisseau spatial moyenné sur au moins une demi-révolution et le paramètre orbital correspondant d'une orbite cible d'arrivée normalisée par rapport à la valeur maximale du taux de changement dudit paramètre orbital , moyenné sur au moins une demi-révolution dudit vaisseau spatial.

Avantageusement, ledit ou chaque dit paramètre orbital est un paramètre orbital équinoxial.

Encore un autre objet de l'invention est un vaisseau spatial équipé d'un tel système embarqué de pilotage.

D'autres caractéristiques, détails et avantages de l'invention ressortiront à la lecture de la description faite en référence aux dessins annexés donnés à titre d'exemple et qui représentent, respectivement :

- La figure 1, le transfert orbital d'un satellite obtenu en utilisant une poussée continue ou quasi-continue ;
- La figure 2, la définition des paramètres orbitaux ;
- Le figure 3, l'ordinogramme d'un procédé selon un mode de réalisation de l'invention ;
- La figure 4, un schéma fonctionnel simplifié d'un vaisseau spatial équipé d'un système de pilotage selon un mode de réalisation de l'invention ;
- Les figures 5a à 5d des graphiques illustrant la mise en oeuvre d'un procédé de pilotage selon l'art antérieur ; et
- Les figures 6a à 6c et 7a, 7b, des graphiques illustrant la mise en oeuvre d'un procédé de pilotage selon un mode de réalisation de l'invention.

Comme cela a été mentionné plus haut, l'invention utilise une loi de commande obtenue à partir d'une fonction de contrôle de Lyapunov (« Control-Lyapunov function » en anglais). Il importe donc de définir une telle fonction et son utilisation pour obtenir une loi de commande.

On considère un système régi par l'équation différentielle

$$\dot{x} = f(x, u) \tag{1}$$

où x est un vecteur d'état qui, dans le cas considéré ici, représente l'écart entre les paramètres orbitaux mesurés d'un vaisseau spatial et les paramètres de l'orbite cible, u un vecteur de commande qui définit la poussée (orientation et éventuellement intensité) et f(x,u) la fonction, issue des lois de la mécanique orbitale, qui exprime la variation temporelle du vecteur d'état en fonction de la valeur présente de ce vecteur et de la commande. Une fonction de contrôle de Lyapunov V(x) est une fonction dérivable de manière continue, strictement positive pour tout x sauf x=0, telle que V(x=0)=0 et que

$$\forall x \neq 0 \quad \exists u \quad \dot{V}(x, u) = \nabla V(x).f(x, u) < 0 \tag{2}.$$

Pour que le vecteur d'état évolue vers sa cible x=0 (c'est-à-dire pour que l'orbite du vaisseau spatial tende vers l'orbite cible), il faut minimiser V(x) ; il faut donc choisir une commande u qui rend sa dérivée temporelle $\dot{V}(x,u)$ aussi négative que possible. Il est donc naturel de prendre

$$u = \arg\min_{\{u\}} \dot{V} \tag{3}$$

Il s'agit donc de trouver une fonction de contrôle de Lyapunov qui fournisse, via l'équation (3), une loi de contrôle proche de l'optimalité. L'optimalité peut être définie, par exemple, par un temps de transfert minimal, une consommation de propulsant minimale ou par une combinaison de ces objectifs.

Avant de proposer une forme pour la fonction de contrôle de Lyapunov, il convient de se pencher sur le choix du vecteur d'état x. Conformément à l'art antérieur, ce vecteur est défini à partir des cinq paramètres orbitaux « classiques », qui sont illustrés à l'aide de la figure 2 :

- le demi grand-axe « a » de l'orbite O (supposée circulaire ou elliptique) ;
- l'excentricité « e » (rapport de la distance centre C -foyer F au demi-grand-axe a ; vaut 0 dans le cas d'une orbite circulaire et est strictement comprise entre 0 et 1 pour une orbite elliptique)
- l'inclinaison « i » du plan orbital PO par rapport à un plan de référence PR, qui peut être par exemple l'écliptique ou l'équateur ;
- la longitude du noeud ascendant NA « $\Omega$ », mesurée par rapport à une direction de référence DR ;
- l'argument du périastre « $\omega$ », qui est l'angle formé par la ligne des noeuds NA-ND et la direction du périastre DPA dans le plan orbital.

Ces paramètres orbitaux présentent l'inconvénient d'être mal définis, et donc de présenter des équations du mouvement singulières (division par zéro), pour des faibles excentricités (e≈0) et pour des faibles inclinaisons (i≈0). Pour cette raison, l'invention utilise des paramètres orbitaux, dits « équinoxiaux », dont les équations du mouvement ne sont jamais singulières et qui sont définis par :

$$
\begin{bmatrix}
a \\
e_x \\
e_y \\
h_x \\
h_y \\
L
\end{bmatrix}
=
\begin{bmatrix}
a \\
e\cos(\Omega + \omega) \\
e\sin(\Omega + \omega) \\
\tan(i/2)\cos(\Omega) \\
\tan(i/2)\sin(\Omega) \\
\Omega + \omega + v
\end{bmatrix}
\tag{4}
$$

où v est l'anomalie vraie, c'est-à-dire l'angle entre la direction du périastre DPA et la ligne reliant le centre C à la position du vaisseau spatial VS. On remarque que les paramètres $e_x$, $e_y$ peuvent être considérés les composantes d'un vecteur « excentricité » de module « e » et ayant pour angle polaire la direction du périgée, tandis que les paramètres $h_x$, $h_y$ sont les composantes d'un vecteur « inclinaison » de module tan($i$/2) et ayant pour angle polaire la direction du noeud ascendant.

L'utilisation des paramètres orbitaux équinoxiaux n'est pas une caractéristique essentielle de l'invention. Si l'orbite cible présente une excentricité et une inclinaison non négligeable il est également possible d'utiliser des paramètres orbitaux classiques.

Les paramètres orbitaux - classiques ou équinoxiaux - sont définis uniquement pour une orbite képlérienne, ce qui n'est pas le cas d'un vaisseau spatial soumis à une poussée. Cependant, en connaissant à chaque instant la position et la vitesse du vaisseau spatial, il est possible de calculer les paramètres de son orbite osculatrice, c'est-à-dire de l'orbite que le vaisseau suivrait si la propulsion était instantanément coupée et en l'absence de toute autre perturbation. La position et la vitesse du vaisseau spatial sont généralement connues grâce à l'utilisation d'un système de navigation GNSS - par mesure directe ou interpolation entre deux mesures successives.

L'invention n'utilise pas les paramètres orbitaux mesurés (ou, plus exactement, calculés à partir des mesures) en tant que tels, mais ces paramètres moyennés sur au moins une demi-période de révolution du vaisseau spatial. En effet, les paramètres orbitaux mesurés oscillent à la fréquence orbitale, ce qui nuit à la stabilité de la commande ; ces oscillations sont supprimées par l'opération de moyenne.

Une fonction de contrôle de Lyapunov selon un mode de réalisation de l'invention peut s'écrire comme une somme pondérée d'erreurs quadratiques moyennes des paramètres orbitaux équinoxiaux. Plus précisément elle peut être donnée par :

$$
V\left(\overline{a}, \overline{e}_x, \overline{e}_y, \overline{h}_x, \overline{h}_y\right) = w_a \left(\frac{\overline{a} - \overline{a}_T}{\dot{\overline{a}}_{\max}}\right)^2 + w_{e_x} \left(\frac{\overline{e}_x - \overline{e}_{x,T}}{\dot{\overline{e}}_{x,\max}}\right)^2 + w_{e_y} \left(\frac{\overline{e}_y - \overline{e}_{y,T}}{\dot{\overline{e}}_{y,\max}}\right)^2
$$
$$
+ w_{h_x} \left(\frac{\overline{h}_x - \overline{h}_{x,T}}{\dot{\overline{h}}_{x,\max}}\right)^2 + w_{h_y} \left(\frac{\overline{h}_y - \overline{h}_{y,T}}{\dot{\overline{h}}_{y,\max}}\right)^2
\tag{5}
$$

où $\overline{a}, \overline{e}_x, \overline{e}_y, \overline{h}_x, \overline{h}_y$ sont les paramètres orbitaux équinoxiaux de l'orbite du vaisseau spatial moyennés sur au moins une demi-révolution, $\overline{a}_T, \overline{e}_{x,T}, \overline{e}_y, T_T, \overline{h}_{xT}, \overline{h}_{y,T}$ les paramètres orbitaux équinoxiaux de l'orbite cible, $\dot{\overline{a}}_{\max}, \dot{\overline{e}}_{x,\max}, \dot{\overline{e}}_{y,\max}, \dot{\overline{h}}_{x,\max}, \dot{\overline{h}}_{y,\max}$ les dérives séculaires (c'est-à-dire les dérivées temporelles moyennes) des paramètres $\overline{a}, \overline{e}_x, \overline{e}_y, \overline{h}_x, \overline{h}_y$ obtenues par application de la loi de commande qui maximise ces dérives séculaires ou, de manière équivalente, l'incrément orbital de chaque paramètre orbital, et $w_j$ (j=a, $e_x$, $e_y$, $h_x$, $h_y$) des coefficients de pondération non négatifs, et de préférence strictement positifs. Dans le mode de réalisation le plus simple, qui donne néanmoins des résultats satisfaisants, ces coefficients de pondérations peuvent être tous égaux entre eux, et notamment être pris égaux à 1. En variante, afin de rapprocher la loi de contrôle de l'optimalité, il est possible de procéder à une optimisation numérique de ces performances. Cette optimisation peut être effectuée au sol, avant le début du transfert, en prenant par exemple comme fonction de coût à minimiser le temps de transfert. Il est aussi possible de répéter l'optimisation au cours du transfert, avec une cadence de répétition très faible (par exemple une fois tous les trois mois), ce qui nécessite de transmettre les nouveaux paramètres optimisés au processeur embarqués du vaisseau spatial.

En pratique, pour trouver les valeurs $\dot{a}_{\max}, \dot{e}_{x,\max}, \dot{e}_{y,\max}, \dot{h}_{x,\max}, \dot{h}_{y,\max}$, on intègre la loi de commande qui maximise la variation de chaque élément orbital équinoxial pour chaque position orbitale L ; puis on moyenne chaque dérivée temporelle sur la période considérée et sur toutes les valeurs de L en laissant les autres éléments orbitaux constants. Cette intégration peut se faire numériquement ou analytiquement.

L'article précité « Optimisation of low-thrust orbit transfers using the Q-Law for the initial guess » préconise également une optimisation des coefficients de pondération de la Q-Law, mais en utilisant des algorithmes génétiques qui s'avèrent très lourds du point de vue computationnel. Dans le cas de l'invention, grâce à l'utilisation de paramètres orbitaux moyens, il est possible d'utiliser des techniques plus simples d'optimisation non-linéaire.

Il est possible d'imposer des contraintes d'altitude (altitude du périastre $r_p$ supérieure ou égale à un premier seuil $r_{p,\min}$ et/ou altitude de l'apoastre $r_p$ inférieure ou égale à un second seuil $r_{a,\max}$) en multipliant la fonction V(x) donnée par l'équation (5) par des fonctions barrière correspondantes $B_\varepsilon^-$, $B_\varepsilon^+$ caractérisées par un paramètre numérique de lissage $\varepsilon$. Une fonction barrière est une fonction continue (et de préférence dérivable) dont la valeur tend rapidement vers l'infini à l'approche d'une valeur limite, tout en restant relativement plate loin de cette valeur. On peut écrire la fonction de contrôle de Lyapunov contrainte :

$$V_{con}\left(\overline{a}, \overline{e}_x, \overline{e}_y, \overline{h}_x, \overline{h}_y\right) = B_\varepsilon^+\left(\frac{r_p\left(\overline{a}, \overline{e}_x, \overline{e}_y\right)}{r_{p,\min}}\right) B_\varepsilon^-\left(\frac{r_a\left(\overline{a}, \overline{e}_x, \overline{e}_y\right)}{r_{a,\max}}\right) V\left(\overline{a}, \overline{e}_x, \overline{e}_y, \overline{h}_x, \overline{h}_y\right) \qquad (6)$$

L'utilisation d'une fonction de contrôle de Lyapunov exprimée en fonction de paramètres orbitaux moyens présente plusieurs avantages :

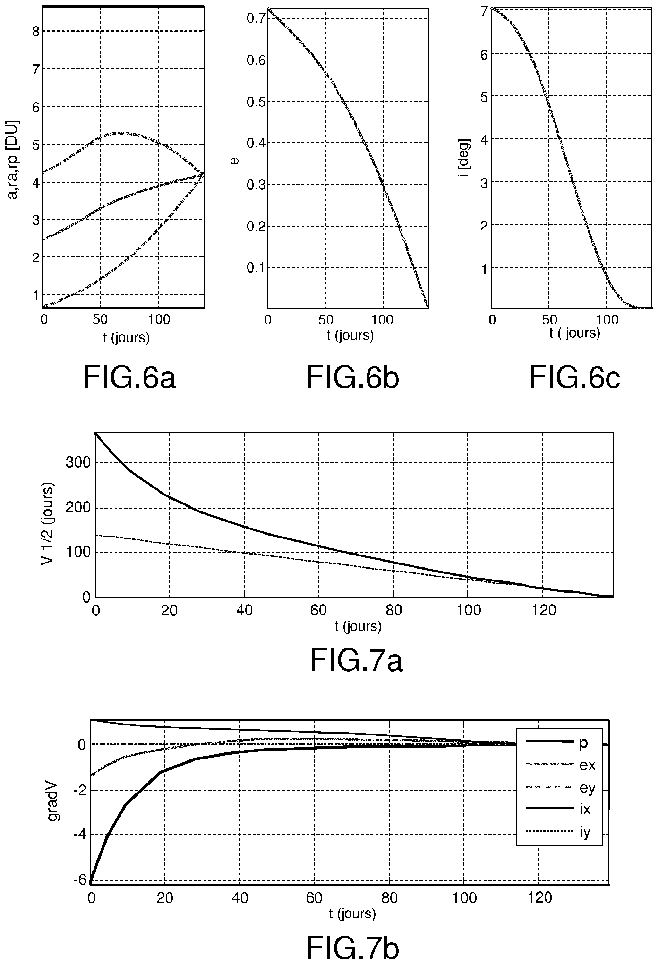

- les paramètres moyens n'oscillent pas à la fréquence orbitale (contrairement aux paramètres orbitaux mesurés non moyennées) ; cela permet une intégration rapide de l'équation différentielle (1), nécessaire pour calculer le vecteur de commande u via l'équation (3) appliquée au système en dynamique moyennée, avec un pas temporel qui peut être de plusieurs révolutions ;
- l'évolution désirée de la poussée est plus lisse ;
- l'évolution temporelle du demi grand-axe est monotone (voir la figure 6a), ce qui permet de mettre en oeuvre une méthode simple pour satisfaire une condition terminale de rendez-vous en longitude.

Cette méthode consiste, à l'approche de l'orbite cible, à :

- prédire la longitude d'arrivée sur l'orbite cible, et estimer l'erreur de rendez-vous par rapport à la longitude souhaitée ;
- modifier, dans la fonction de contrôle de Lyapunov, le paramètre $\overline{a}_T$ en calculant dynamiquement un petit écart à la cible pour ajuster la dérive moyenne en longitude géographique ; et
- avant la fin du transfert, restaurer la valeur initiale de ce paramètre .

L'idée est de prévoir la longitude d'arrivée et, si elle ne correspond pas à la cible, à modifier le paramètre $\overline{a}_T$ de manière à corriger l'erreur. De manière équivalente, cela revient à changer le poids numérique associé au demi-grand axe dans un rapport égal à $\{(\overline{a} - \overline{a}_T')/(\overline{a} - \overline{a}_T)\}^2$. Cette correction est dynamique au sens où elle doit être recalculée plusieurs fois le long de la trajectoire de transfert, car la prédiction de la longitude d'arrivée est affectée d'une erreur qui a tendance à diminuer dans le temps.

En général il n'est pas utile de mettre en oeuvre la correction plus d'un mois ou deux avant la date d'arrivée prévisionnelle sur l'orbite cible, car les erreurs de prédiction seraient trop importantes. En outre, il faut arrêter la correction au moins une semaine ou deux avant la date d'arrivée prévisionnelle pour éviter que l'amplitude des corrections ne diverge (quand il reste peu de temps, il faut une modification importante de $\bar{a}_T$ pour changer, même légèrement, la longitude d'arrivée). Dans la phase finale du transfert, on garde la dernière valeur modifiée du paramètre $\bar{a}_T$, ou la dernière valeur modifiée de son poids.

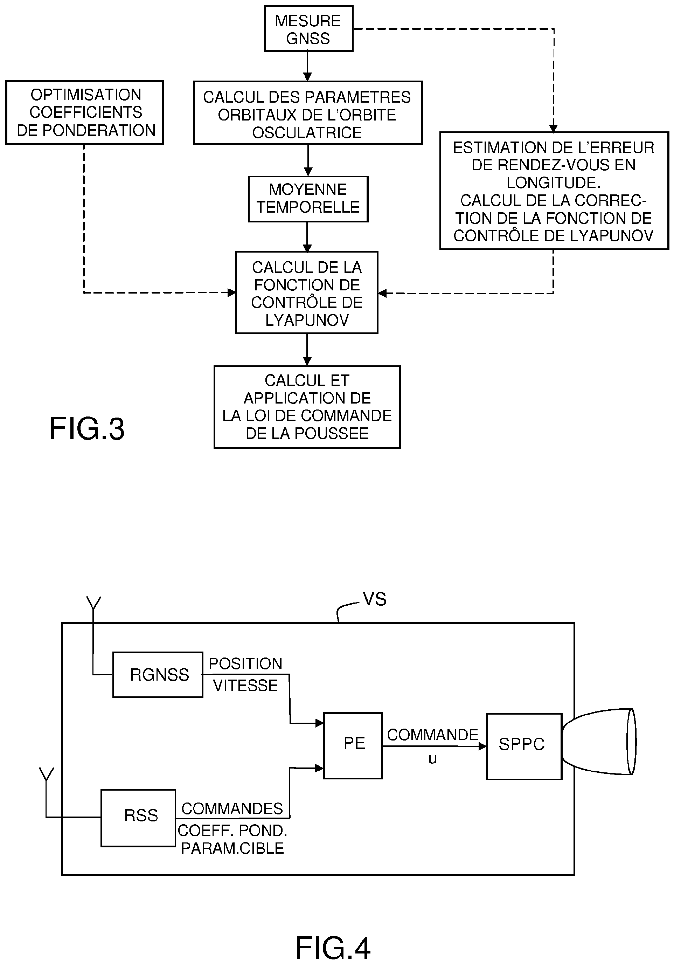

La figure 3 montre un ordinogramme d'un procédé selon l'invention.

On commence par la mesure de la position et de la vitesse du vaisseau spatial, effectuée par GNSS (ou par télémétrie, mais on perd alors l'autonomie du vaisseau) au moins une fois par révolution. Cela permet de déterminer, à une pluralité d'instants, les paramètres orbitaux (équinoxiaux) du vaisseau spatial, qui sont ensuite moyennés. Les paramètres moyens ainsi obtenus sont utilisés pour calculer la fonction de contrôle de Lyapunov. Les coefficients de pondération de cette fonction peuvent être optimisés périodiquement par un ordinateur situé au sol, et transmis au processeur embarqué. En outre, un paramètre cible peut être modifié temporairement pour corriger une erreur estimée de rendez-vous en longitude, cette estimation étant à son tour calculée à partir des mesures RGNSS. Ensuite, la fonction de contrôle de Lyapunov est utilisée pour calculer la fonction de commande u, qui pilote le système de propulsion continue ou quasi-continue.

En pratique, un récepteur GNSS acquiert des mesures de position et de vitesse à une cadence élevée (plusieurs fois par minute), mais l'on effectue généralement un filtrage de ces mesures pour ne retenir que quelques acquisitions (typiquement entre 1 et 4) par révolution.

La figure 4 est un schéma fonctionnel très simplifié d'un vaisseau spatial VS équipé d'un système de pilotage selon l'invention. Le système de pilotage comprend : un récepteur GNSS (référence GNSS) qui fournit des mesures de position et de vitesse ; optionnellement un récepteur (référence RSS) qui reçoit d'une station au sol des mises à jour des paramètres de pondération de la fonction de contrôle de Lyapunov et/ou des mises à jour des paramètre de l'orbite cible et/ou d'autres commandes ; un processeur embarqué PE qui reçoit les signaux de position et de vitesse du récepteur GNSS (et éventuellement les données en provenance du récepteur RSS) et qui calcule un signal de commande u ; et un système de propulsion (généralement électrique) à poussée continue ou quasi-continue qui reçoit et applique ce signal de commande.

Un procédé selon l'invention a été testé pour le cas de la mise à poste d'un satellite géostationnaire à partir d'une orbite d'injection elliptique et inclinée. Le tableau 1 ci-dessous donne les paramètres orbitaux (classiques) de l'orbite initiale et de l'orbite cible :

Tableau 1

| Paramètres orbitaux | Orbite initiale | Orbite cible |
|---|---|---|
| Demi-grand axe (a) | 24505,9 km | 42165 km |
| Excentricité (e) | 0,725 | 0,001 |
| Inclinaison (i) | 7,05 deg | 0,05 deg |
| Long. noeud ascendant ($\Omega$) | 0 deg | libre |
| Argument du périgée ($\omega$) | 0 deg | libre |

Les paramètres « libres » sont traités en mettant à zéro le poids $w_j$ correspondant, ou alors en fixant une cible orbitale égale au paramètre initial (cette deuxième méthode fonctionne moins bien que la première si l'on considère les perturbations naturelles dans la dynamique).

Le satellite présente une masse initiale de 2000 kg, utilise un propulsant (Xénon) d'impulsion spécifique 2000 s et son système de propulsion électrique a une poussée de 0,35 N. On a considéré des solutions à temps minimal, dans lesquelles la poussée prend toujours sa valeur maximale et seule son orientation est pilotée.

Le tableau 2 illustre les performances obtenues en utilisant un pilotage « optimal », au sens qu'il minimise la durée du transfert, calculé au moyen de la technique T_3D (voir l'article de T. Dargent cité plus haut) et par la méthode de l'invention (avec des coefficients de pondération unitaires). Les métriques de performance considérés sont la durée de transfert (en jours), la consommation de propulsant (en kg) et le Delta-V.

| Métrique de performance | T_3D | Invention |
|---|---|---|
| Durée du transfert | 137,289 jours | 138,735 jours |
| Consommation de propulsant | 211,673 kg | 213,903 kg |
| Delta-V | 2194,1 m/s | 2218,5 m/s |

Ces résultats sont très satisfaisants, car la méthode selon l'invention entraine un surcout très faible (1,05% pour la durée de transfert et la consommation de propulsant, 1,01% pour le Delta-V) par rapport à la solution optimale, tout en étant beaucoup moins couteuse en termes de ressources de calcul, ce qui permet se mise en oeuvre par un processeur embarqué. Et ces performances pourraient être encore améliorées en optimisant les coefficients de pondération de la fonction de contrôle de Lyapunov.

L'application de la Q-Law (cf. l'article précité « Techniques for designing many-revolution, electric-propulsion trajectories », cas B) conduit à une consommation de Xénon sensiblement plus élevée : 221 kg. L'utilisation d'une optimisation par algorithme génétique permet de réduire cette consommation à 213 kg, mais au prix d'une augmentation considérable de la complexité computationnelle.

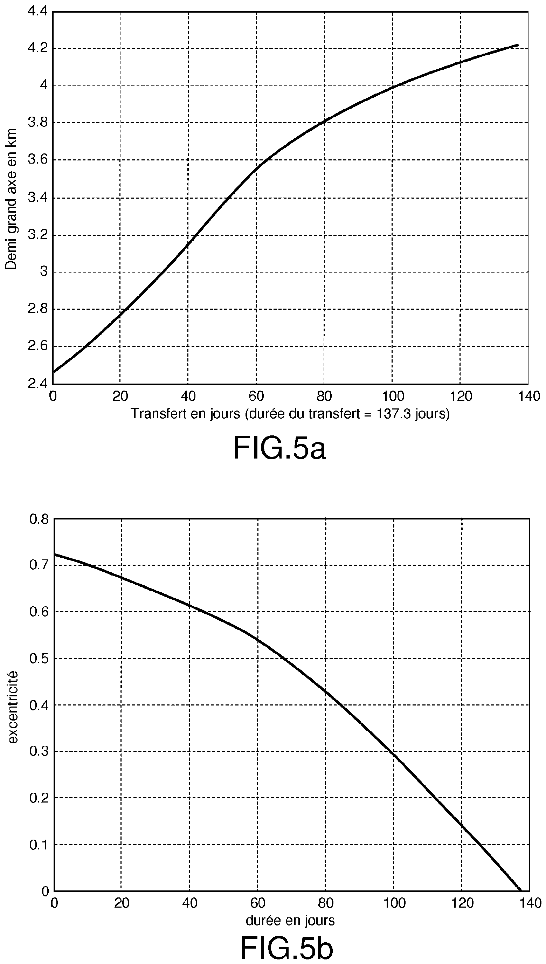

Les figures 5a à 5d permettent de suivre l'historique du transfert orbital obtenu par la méthode T_3D. Plus précisément :

- La figure 5a montre l'évolution temporelle du demi-grand axe de l'orbite
- La figure 5b montre l'évolution temporelle de l'excentricité ;

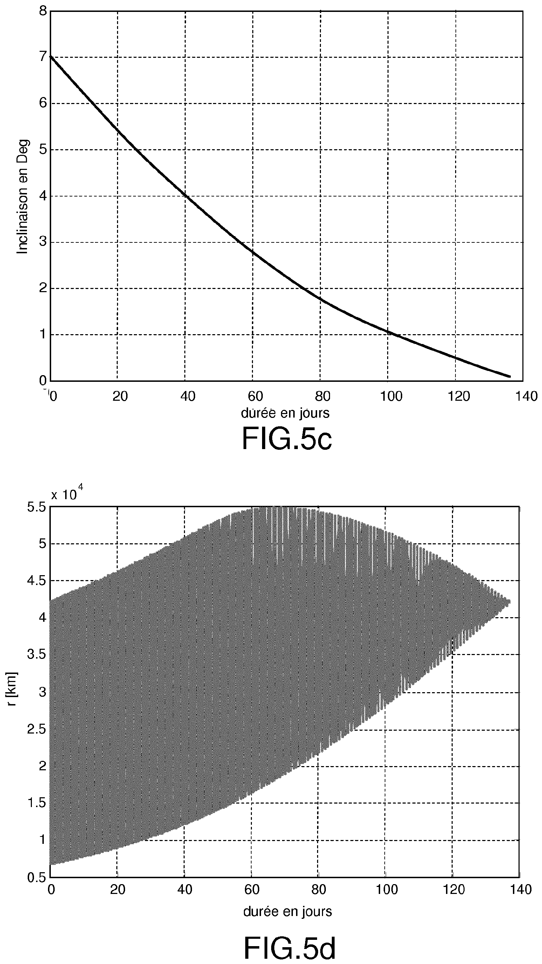

- La figure 5c montre l'évolution temporelle de l'inclinaison ; et
- La figure 5d montre l'évolution temporelle du rayon orbital, qui oscille fortement à la demi-période orbitale.

Les figures 6a à 6c permettent de suivre l'historique du transfert orbital obtenu par la méthode selon l'invention. Plus précisément :

- La figure 6a montre l'évolution temporelle du rayon à l'apogée ra (courbe pointillée la plus élevée), du rayon au périgée rp (courbe pointillée la moins élevée) et du demi-grand axe a (courbe trait continu) ; on peut remarquer que l'évolution du demi-grand axe est monotone, ce qui permet d'imposer le respect d'une condition de rendez-vous en longitude, comme cela a été expliqué plus haut. L'évolution du rayon à l'apogée, par contre, n'est pas monotone car il s'est avéré optimal de remonter l'apogée pour rendre plus efficace la correction de l'inclinaison. L'unité de longueur utilisée pour l'axe des ordonnées, désignées par DU, correspond à 10.000 km.
- La figure 6b montre l'évolution temporelle de l'excentricité ; et
- La figure 6c montre l'évolution temporelle de l'inclinaison.

Les profils du demi-grand axe et de l'excentricité ressemblent beaucoup à ceux des solutions du contrôle optimal. En revanche, le profil en inclinaison est sensiblement différent, en particulier en fin de transfert. Cela signifie qu'il existe de nombreuses trajectoires, différentes entre elles mais qui sont « quasi optimales ». La méthode selon l'invention permet d'en trouver une.

La figure 7a montre l'évolution de la fonction de contrôle de Lyapunov - en fait, de sa racine carrée, dont la dimension est celle d'un temps, et qui peut être considérée une approximation par excès de la durée restante du transfert. La ligne pointillée représente la vraie durée restante, déterminée a posteriori. La figure 7b représente les dérivées de la fonction de contrôle de Lyapunov rapport aux paramètres orbitaux équinoxiaux, qui permettent de déterminer la direction de la poussée.

**Revendications**

1. Procédé de transfert orbital d'un vaisseau spatial (VS) utilisant une propulsion à poussée continue ou quasi-continue, le procédé comprenant :

   • l'acquisition, au moins une fois dans chaque révolution du vaisseau spatial, de mesures de sa position et de sa vitesse ;
   • le calcul d'une fonction de commande (u) de la poussée en fonction desdites mesures ; et
   • le pilotage de ladite poussée conformément à ladite loi de commande ;

**caractérisé en ce que** ladite loi de commande est obtenue à partir d'une fonction de contrôle de Lyapunov proportionnelle à une somme pondérée de termes, chaque terme étant représentatif d'une erreur quadratique entre un paramètre orbital mesuré d'une orbite du vaisseau spatial moyenné sur au moins une demi-révolution et le paramètre orbital correspondant d'une orbite cible d'arrivée, normalisée par rapport à la valeur maximale de la dérive, moyennée sur au moins une demi-révolution, dudit paramètre orbital dudit vaisseau spatial.

2. Procédé selon la revendication 1 dans lequel ledit ou chaque dit paramètre orbital est un paramètre orbital équinoxial.

3. Procédé selon l'une des revendications précédentes dans lequel l'acquisition desdites mesures de position et de vitesse est effectuée à bord dudit vaisseau spatial au moyen d'un récepteur GNSS (RGNSS).

4. Procédé selon l'une des revendications précédentes dans lequel ledit calcul d'une fonction de commande est effectué par un processeur embarqué (PE) à bord dudit vaisseau spatial.

5. Procédé selon l'une des revendications précédentes dans lequel ladite fonction de contrôle de Lyapunov comprend au moins un terme multiplicatif constitué par une fonction barrière imposant une contrainte de d'altitude maximale ou minimale dudit vaisseau spatial.

6. Procédé selon l'une des revendications précédentes dans lequel les poids de ladite somme pondérée sont constants et non-négatifs.

7. Procédé selon la revendication 6 dans lequel les poids de ladite somme pondérée sont tous égaux.

8. Procédé selon l'une des revendications 1 à 5 comportant une étape d'optimisation numérique des poids de ladite somme pondérée, cette étape étant effectuée par un ordinateur au sol avant le début du transfert et au moins une fois au cours du transfert.

9. Procédé selon l'une des revendications précédentes comportant également, après une phase initiale du transfert :

   • le calcul d'une estimation d'une erreur de rendez-vous en longitude sur l'orbite cible d'arrivée ;
   • la modification, dans ladite fonction de contrôle de Lyapunov, d'un paramètre orbital de ladite orbite cible d'arrivée représentant son demi-grand axe ou d'un coefficient de pondération de ce paramètre ; et
   • au cours d'une phase terminale du transfert, le maintien d'une valeur constante dudit paramètre orbital et de son coefficient de pondération.

10. Procédé selon l'une des revendications précédentes dans lequel ladite propulsion est de type électrique.

11. Procédé selon l'une des revendications précédentes dans lequel le pilotage de ladite poussée comporte la détermination d'au moins son orientation.

12. Système embarqué de pilotage d'un vaisseau spatial comprenant :

   - un système de propulsion à poussée continue ou quasi-continue (SPPC) ;
   - un récepteur GNSS (RGNSS) configuré pour acquérir, au moins une fois dans chaque révolution du vaisseau spatial, des mesures de sa position et de sa vitesse ;
   - un processeur (PE) programmé pour calculer une fonction de commande de la poussée en fonction desdites mesures et pour piloter ledit système de propulsion à poussée continue ou quasi-continue conformément à ladite loi de commande ;

**caractérisé en ce que** ledit processeur est programmé pour calculer ladite loi de commande à partir d'une fonction de contrôle de Lyapunov proportionnelle à une somme pondérée de termes, chaque terme étant représentatif d'une erreur quadratique entre un paramètre orbital mesuré d'une orbite du vaisseau spatial moyenné sur au moins une demi-révolution et le paramètre orbital correspondant d'une orbite cible d'arrivée normalisée par rapport à la valeur maximale du taux de changement dudit paramètre orbital, moyenné sur au moins une demi-révolution dudit vaisseau spatial.

13. Système selon la revendication 12 dans lequel ledit ou chaque dit paramètre orbital est un paramètre orbital équinoxial.

**14.** Vaisseau spatial (VS) équipé d'un système embarqué de pilotage selon l'une des revendications 12 ou 13.

**Patentansprüche**

**1.** Verfahren für einen Orbittransfer eines Raumfahrzeugs (VS) unter Nutzung eines kontinuierlichen oder quasi-kontinuierlichen Schubantriebs, wobei das Verfahren Folgendes umfasst:

  • Erfassen, mindestens einmal bei jeder Umdrehung des Raumfahrzeugs, von Messwerten seiner Position und seiner Geschwindigkeit;
  • Berechnen einer Steuerfunktion (u) des Schubs in Abhängigkeit von den Messwerten; und
  • Lenken des Schubs entsprechend dem Steuergesetz;

  **dadurch gekennzeichnet, dass** das Steuergesetz auf der Basis einer Lyapunov-Kontrollfunktion proportional zu einer gewichteten Summe von Termen erhalten wird, wobei jeder Term einen quadratischen Fehler zwischen einem gemessenen Orbitparameter eines Orbits des Raumfahrzeugs, gemittelt über mindestens eine Halbumdrehung, und dem entsprechenden Orbitparameter eines Ankunftszielorbits, normalisiert mit Bezug auf den Maximalwert des Derivats, gemittelt über mindestens eine Halbumdrehung, des Orbitparameters des Raumfahrzeugs repräsentiert.

**2.** Verfahren nach Anspruch 1, bei dem der oder jeder Orbitparameter ein äquinoktialer Orbitparameter ist.

**3.** Verfahren nach einem der vorherigen Ansprüche, bei dem die Erfassung der Positions- und Geschwindigkeitsmesswerte an Bord des Raumfahrzeugs mittels eines GNSS-Empfängers (RGNSS) erfolgt.

**4.** Verfahren nach einem der vorherigen Ansprüche, bei dem das Berechnen einer Steuerfunktion durch einen Prozessor (PE) an Bord des Raumfahrzeugs erfolgt.

**5.** Verfahren nach einem der vorherigen Ansprüche, in dem die Lyapunov-Steuerfunktion mindestens einen Multiplikationsterm umfasst, gebildet durch eine Sperrfunktion, die eine maximale oder minimale Höhenbeschränkung des Raumfahrzeugs auferlegt.

**6.** Verfahren nach einem der vorherigen Ansprüche, in dem die Gewichtungen der gewichteten Summe konstant und nicht-negativ sind.

**7.** Verfahren nach Anspruch 6, bei dem die Gewichtungen der gewichteten Summe alle gleich sind.

**8.** Verfahren nach einem der Ansprüche 1 bis 5, das einen Schritt des digitalen Optimierens der Gewichtungen der gewichteten Summe beinhaltet, wobei dieser Schritt durch einen Computer am Boden vor Beginn des Transfers und mindestens einmal im Laufe des Transfers durchgeführt wird.

**9.** Verfahren nach einem der vorherigen Ansprüche, das nach einer Anfangsphase des Transfers auch Folgendes umfasst:

  • Berechnen einer Schätzung eines Rendezvous-Fehlers nach geografischer Länge auf dem Ankunftszielorbit;
  • Modifizieren, in der Lyapunov-Kontrollfunktion, eines Orbitparameters des Ankunftszielorbits, der seine große Halbachse repräsentiert, oder eines Gewichtungskoeffizienten dieses Parameters; und
  • Halten, im Laufe einer Endphase des Transfers, eines konstanten Wertes des Orbitparameters und seines Gewichtungskoeffizienten.

**10.** Verfahren nach einem der vorherigen Ansprüche, in dem der Antrieb vom elektrischen Typ ist.

**11.** Verfahren nach einem der vorherigen Ansprüche, bei dem die Lenkung des Schubs die Bestimmung von mindestens seiner Orientierung umfasst.

**12.** Bordsystem zum Lenken eines Raumfahrzeugs, das Folgendes umfasst:

  - ein kontinuierliches oder quasi-kontinuierliches Schubantriebssystem (SPPC);
  - einen GNSS-Empfänger (RGNSS), konfiguriert zum Erfassen, mindestens einmal bei jeder Umdrehung des Raumfahrzeugs, von Messwerten seiner Position und seiner Geschwindigkeit;
- einen Prozessor (PE), programmiert zum Berechnen einer Steuerfunktion des Schubs in Abhängigkeit von den Messwerten, und zum Lenken des kontinuierlichen oder quasi-kontinuierlichen Schubantriebssystems gemäß dem Steuergesetz;

**dadurch gekennzeichnet, dass** der Prozessor zum Berechnen des Steuergesetzes auf der Basis einer Lyapunov-Kontrollfunktion proportional zu einer gewichteten Summe von Termen programmiert ist, wobei jeder Term einen quadratischen Fehler zwischen einem gemessenen Orbitparameter eines Orbits des Raumfahrzeugs, gemittelt über mindestens eine Halbumdrehung, und dem entsprechenden Orbitparameter eines Ankunftszielorbits, normalisiert mit Bezug auf den Maximalwert der Änderungsrate des Orbitparameters, gemittelt über mindestens eine Halbumdrehung des Raumfahrzeugs repräsentiert.

13. System nach Anspruch 12, bei dem der oder jeder Orbitparameter ein äquinoktialer Orbitparameter ist.

14. Raumfahrzeug (BS), ausgerüstet mit einem an Bord befindlichen Steuersystem nach Anspruch 12 oder 13.

**Claims**

1. Orbit transfer method for a spacecraft (VS) using a continuous or quasi-continuous thrust propulsion, the method comprising:

   • the acquisition, at least once in each revolution of the spacecraft, of measurements of its position and of its velocity;
   • the computation of a thrust control function (u) as a function of said measurements; and
   • the driving of said thrust in accordance with said control law;

   **characterised in that** said control law is obtained from a control-Lyapunov function proportional to a term-weighted sum, each term being representative of a quadratic error between a measured orbital parameter of an orbit of the spacecraft averaged over at least one half-revolution and the corresponding orbital parameter of an final target orbit, normalised relative to the maximum value of the drift, averaged over at least one half-revolution, of said orbital parameter of said spacecraft.

2. Method according to claim 1, wherein said or each said orbital parameter is an equinoctial orbital parameter.

3. Method according to any one of the preceding claims, wherein the acquisition of said position and velocity measurements is performed on-board said spacecraft by means of a GNSS receiver (RGNSS).

4. Method according to any one of the preceding claims, wherein said computation of a control function is performed by an embedded processor (PE) on-board said spacecraft.

5. Method according to any one of the preceding claims, wherein said control-Lyapunov function comprises at least one multiplying term constituted by a barrier function imposing a constraint of maximum or minimum altitude of said spacecraft.

6. Method according to any one of the preceding claims, wherein the weights of the weighted sum are constant and non-negative.

7. Method according to claim 6, wherein the weights of the weighted sum are all equal.

8. Method according to any one of claims 1 to 5, comprising a step of numerical optimisation of the weights of said weighted sum, this step being performed by a computer on the ground before the start of the transfer and at least once during the transfer.

9. Method according to any one of the preceding claims, also comprising, after an initial phase of the transfer:

   • the computation of an estimation of a longitude encounter error on the final target orbit;
   • the modification, in said control-Lyapunov function, of an orbital parameter of said final target orbit representing the half-major axis thereof or of a weighting coefficient of this parameter; and
• during a terminal phase of the transfer, the maintenance of a constant value of said orbital parameter and of its weighting coefficient.

10. Method according to any one of the preceding claims, wherein said propulsion is of the electric type.

11. Method according to any one of the preceding claims, wherein the driving of said thrust comprises the determination of at least its orientation.

12. Embedded system for driving a spacecraft comprising:

- a continuous or quasi-continuous thrust propulsion system (SPPC);
- a GNSS receiver (RGNSS) configured to acquire, at least once in each revolution of the spacecraft, measurements of its position and of its velocity;
- a processor (PE) programmed to compute a thrust control function as a function of said measurements and to drive said continuous or quasi-continuous thrust propulsion system in accordance with said control law;

**characterised in that** said processor is programmed to compute said control law from a control-Lyapunov function proportional to a term-weighted sum, each term being representative of a quadratic error between a measured orbital parameter of an orbit of the spacecraft averaged over at least one half-revolution and the corresponding orbital parameter of an final target orbit normalised relative to the maximum value of the rate of change of said orbital parameter, averaged over at least one half-revolution of said spacecraft.

13. System according to claim 12, wherein said or each orbital parameter is an equinoctial orbital parameter.

14. Spacecraft (VS) equipped with an embedded driving system according to any one of claims 12 or 13.

FIG.1

FIG.2

MESURE
GNSS

OPTIMISATION
COEFFICIENTS
DE PONDERATION

CALCUL DES PARAMETRES
ORBITAUX DE L'ORBITE
OSCULATRICE

ESTIMATION DE L'ERREUR
DE RENDEZ-VOUS EN
LONGITUDE.
CALCUL DE LA CORREC-
TION DE LA FONCTION DE
CONTRÔLE DE LYAPUNOV

MOYENNE
TEMPORELLE

CALCUL DE LA
FONCTION DE
CONTRÔLE DE
LYAPUNOV

CALCUL ET
APPLICATION DE
LA LOI DE COMMANDE
DE LA POUSSEE

FIG.3

VS

RGNSS

POSITION
VITESSE

PE

COMMANDE
u

SPPC

RSS

COMMANDES
COEFF. POND.
PARAM.CIBLE

FIG.4

FIG.5a

FIG.5b

FIG.5c

FIG.5d

FIG.6a    FIG.6b    FIG.6c

FIG.7a

FIG.7b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2738103 A

**Littérature non-brevet citée dans la description**

- **A.E. PETROPOULOS ; S. LEE.** Optimisation of low-thrust orbit transfers using the Q-Law for the initial guess. *AAS/AIAA Astrodynamics Specialists Conference,* 2005

- Design and Optimization of Low-thrust Orbit Transfert. **S. LEE et al.** Aerospace Conference, 2005 IEEE. IEEE, 2005, 855-869
- **A.E. PETROPOULOS et al.** Techniques for designing many-revolution, electric-propulsion trajectories. *AAS 14-373,* 2014